# EUROPÄISCHE PATENTSCHRIFT

(11) **EP 3 420 238 B1**
(45) Veröffentlichungstag und Bekanntmachung des Hinweises auf die Patenterteilung: **20.05.2020**
(21) Anmeldenummer: 17720032.6
(22) Anmeldetag: 18.04.2017
(51) Int. Cl.: F16B 5/06

(54) **VORRICHTUNG ZUM AUSGLEICHEN VON TOLERANZEN**
DEVICE FOR COMPENSATING FOR TOLERANCES
DISPOSITIF DE COMPENSATION DE TOLÉRANCES

(30) Priorität: 20.04.2016 DE 102016107357
(43) Veröffentlichungstag der Anmeldung: 02.01.2019
(73) Patentinhaber: Witte Automotive GmbH, 42551 Velbert (DE)
(72) Erfinder: ERPENBECK, Till, 42555 Velbert (DE)
(74) Vertreter: Manitz Finsterwald Patent- und Rechtsanwaltspartnerschaft mbB
(86) Internationale Anmeldenummer: PCT/EP2017/059117
(87) Internationale Veröffentlichungsnummer: WO 2017/182434

(56) Entgegenhaltungen:
- EP-A2- 2 003 346
- DE-A1-102012 007 996

## Beschreibung

Die vorliegende Erfindung betrifft eine Vorrichtung zum Ausgleichen von Toleranzen zwischen einem ersten Bauteil und einem zweiten Bauteil, umfassend ein Grundelement, welches eine Längsmittelachse definiert, ein mit dem Grundelement in Gewindeeingriff stehendes Ausgleichselement und ein mit dem Grundelement fest verbundenes Halteelement zum Halten der Vorrichtung an dem ersten Bauteil, wobei das Halteelement einen Grundkörper umfasst und wobei an dem Grundkörper eine Stützwand ausgebildet ist, die im am ersten Bauteil gehaltenen Zustand der Vorrichtung einen dem zweiten Bauteil abgewandten oberen Rand aufweist.

Eine derartige Vorrichtung ist grundsätzlich bekannt und kommt im Automobilbereich beispielsweise bei der Montage einer Reling an dem Dach eines Fahrzeugs zum Einsatz. Dabei dient die Vorrichtung konkret dazu, Toleranzen im Abstand zwischen einem Dachblech des Kraftfahrzeugs (erstes Bauteil) und einer darunter liegenden Trägerstruktur (zweites Bauteil) in Richtung der Längsmittelachse auszugleichen. Hierzu wird die Vorrichtung mittels seines Halteelements in eine dafür vorgesehene Aussparung des Dachblechs eingeclipst und das Ausgleichselement soweit aus dem Grundelement herausgedreht, bis es sich nach unten an der darunterliegenden Trägerstruktur abstützt und das Dachblech untergreifende Clipse des Halteelements sich nach oben an dem Dachblech abstützen. Ein Abschnitt des Grundelements ragt dabei nach oben über das Dachblech hinaus und bildet eine Anlagefläche für die zu montierende Reling.

Damit sich die Vorrichtung leicht in die Aussparung der Dachhaut einclipsen lässt, sind die Clipse des Halteelements vergleichsweise weich ausgebildet. Dies ist jedoch insofern problematisch, als die Clipse sich entsprechend leicht verformen lassen, wenn das mit der Trägerstruktur bereits in Eingriff stehende Ausgleichselement weiter aus dem Grundelement herausgedreht wird, was bei erhöhten Drehmomenten passieren kann, die insbesondere bei dem Herausdrehen des Ausgleichselements mittels eines eigens hierfür vorgesehenen Werkzeugs vorkommen können. Eine solche unerwünschte Verformung der Clipse führt dazu, dass das Grundelement undefiniert weit nach oben über das Dachblech hinausragt, was wiederum bedeutet, dass die Reling, welche üblicherweise mittels mehrerer Vorrichtungen am Dach fixiert wird, über ihre Länge ein ungleichmäßiges Spaltmaß zum Dachblech aufweist, was nicht nur das äußere Erscheinungsbild, sondern auch die Funktion einer zwischen der Reling und dem Dachblech angeordneten Dichtung beeinträchtigt.

Das Dokument EP 2 003 346 A2 zeigt eine Befestigungseinrichtung mit Toleranzausgleich.

Eine Aufgabe der Erfindung ist es, eine Vorrichtung der eingangs genannten Art zu schaffen, die sich mit einem geringem Kraftaufwand montieren lässt und im montierten Zustand einen definierten Überstand des Grundelements über das erste Bauteil auf einer dem zweiten Bauteil abgewandten Seite sicherstellt.

Die Aufgabe wird durch den Gegenstand des Anspruchs 1 gelöst, insbesondere dadurch, dass an dem Grundkörper eine Stützwand ausgebildet ist, die im am ersten Bauteil gehaltenen Zustand der Vorrichtung einen dem zweiten Bauteil abgewandten oberen Rand aufweist und die einen Auslenkabschnitt umfasst, der entgegen einer Rückstellkraft entlang einer nicht senkrecht zur Längsmittelachse orientierten Biegelinie auslenkbar ist.

Der Erfindung liegt der allgemeine Gedanke zugrunde, eine im montierten Zustand der Vorrichtung durch das Abstützen des Ausgleichselements an dem zweiten Bauteil auf das Grundelement und das Halteelement ausgeübte Kraft über eine an dem Grundelement ausgebildete Stützwand an das erste Bauteil abzuleiten, welche einen Auslenkabschnitt ausbildet, der entlang einer nicht senkrecht zur Längsmittelachse orientierten und diagonal durch die Stützwand verlaufenden Biegelinie auslenkbar ist. Aufgrund des zur Längsmittelachse nicht senkrechten Verlaufs der Biegelinie lässt sich der Auslenkabschnitt mit vergleichsweise geringem Kraftaufwand in einer für die Montage der Vorrichtung in der Aussparung des ersten Bauteils erforderlichen Richtung quer zur Längsmittelachse auslenken und in das erste Bauteil einclipsen. Gleichzeitig weist die Stützwand in Richtung der Längsmittelachse gesehen eine höhere Stabilität auf und kann somit in dieser Richtung höhere Kräfte übertragen, ohne sich dabei unerwünscht zu verformen. Das Grundelement der am ersten Bauteil gehaltenen und sich am zweiten Bauteil abstützenden Vorrichtung ragt im Ergebnis also stets um ein definiertes Maß auf der dem zweiten Bauteil abgewandten Seite über das erste Bauteil hervor. Somit lässt sich unter Verwendung mehrerer erfindungsgemäßer Vorrichtungen beispielsweise eine Reling mit über ihre Länge konstantem Spaltmaß einfach an dem Dach eines Kraftfahrzeugs montieren.

Vorteilhafte Ausbildungen der Erfindung sind den Unteransprüchen, der Beschreibung und den Zeichnungen zu entnehmen.

Das Grundelement, das Ausgleichselement sowie das Halteelement können aus einem Kunststoff, wie zum Beispiel Polyoxymethylen, gefertigt sein. Es ist aber auch denkbar, insbesondere das Grundelement und das Ausgleichselement aus einem Metallmaterial zu fertigen.

Das Grundelement und das Halteelement sind bevorzugt form- und/oder kraftschlüssig fest miteinander verbunden, zum Beispiel verpresst. Es ist aber auch denkbar, das Grundelement und das Halteelement stoffschlüssig zu verbinden, zum Beispiel zu verkleben. Überdies ist es prinzipiell auch möglich, das Grundelement und das Halteelement einstückig auszubilden.

Vorteilhafterweise weist die Stützwand eine konstante Wandstärke auf. Es ist aber auch denkbar, dass die Stützwand unterschiedliche Wandstärken aufweist, wobei zum leichteren Einführen der Vorrichtung in die Aussparung des ersten Bauteils die Wandstärke insbesondere nach außen hin schmaler werden kann. Auch ist es denkbar, dass der Auslenkabschnitt eine unterschiedliche, insbesondere dünnere, Wandstärke aufweist als ein Abschnitt der Stützwand, der nicht ausgelenkt wird.

Bevorzugt weist die Stützwand einen Außenrand mit einer zu der Längsmittelachse parallelen Erstreckungskomponente auf, wobei der Außenrand und die Biegelinie zueinander beabstandet sind. Der Abstand zwischen dem Außenrand und der Biegelinie definiert eine Hebellänge.

Vorteilhafterweise nimmt der Abstand zwischen dem Außenrand und der Biegelinie in Richtung des oberen Randes zu. Da bei größerer Hebellänge weniger Kraft aufgebracht werden muss, um einen Hebel auszulenken, nimmt somit die aufzubringende Kraft zur Auslenkung des Auslenkabschnitts in Richtung des oberen Randes ab, woraus ein degressiver Kräfteverlauf beim Einclipsen der Vorrichtung in das erste Bauteil resultiert.

Des Weiteren muss der Außenrand nicht notwendigerweise parallel zur Längsmittelachse verlaufen. Insbesondere kann ein Abstand zwischen dem Außenrand und der Längsmittelachse in Richtung des oberen Randes zunehmen.

Gemäß einer ersten Ausführungsform verläuft die Biegelinie ausgehend von einem Bereich, in dem der obere Rand aus dem Grundkörper hervorgeht, diagonal durch die Stützwand in Richtung Außenrand.

Vorteilhafterweise ist ein Paar von in Umfangsrichtung des Grundkörpers zueinander beabstandeten Stützwänden vorgesehen. Insbesondere ist auf gegenüberliegenden Seiten des Grundkörpers jeweils ein Paar von Stützwänden vorgesehen. Es erweist sich als günstig, wenn zwei Paare von Stützwänden diametral zueinander an dem Grundkörper angeordnet sind, wobei es auch möglich ist, zwei Paare von Stützwänden nicht diametral zueinander anzuordnen. Grundsätzlich ist auch denkbar, dass mehr als zwei Paare von Stützwänden an dem Grundkörper ausgebildet sind. Außerdem ist denkbar, nur eine Stützwand eines Paares von Stützwänden mit einem Auslenkabschnitt auszubilden.

Das Einclipsen der Vorrichtung in die Aussparung des ersten Bauteils wird zusätzlich noch dadurch erleichtert, dass der Abstand zwischen den Stützwänden eines Paares von Stützwänden in Richtung des oberen Randes zunimmt, die Stützwände nach oben gewissermaßen also auseinanderlaufen.

Zu einer sicheren Verclipsung der Vorrichtung an dem ersten Bauteil trägt außerdem bei, wenn der Abstand zwischen den Stützwänden eines Paares von Stützwänden ausgehend von dem Grundkörper nach außen hin zunimmt. Die Stützwände eines Paares von Stützwänden spreizen sich mit anderen Worten von dem Grundkörper ausgehend nach außen hin auf, wobei ihre Auslenkabschnitte zum Einführen der Vorrichtung in die Aussparung zusammen gedrückt werden können. Bei entsprechend angepasster Kontur der Aussparung ist hierdurch sichergestellt, dass die Stützflächen bildenden oberen Ränder der Stützwände zumindest teilweise unter einem die Aussparung begrenzenden Bereich des ersten Bauteils zu liegen kommen und sich wirksam an diesem abstützen können.

Bevorzugt sind die Stützwände eines Paares von Stützwänden voneinander weggekrümmt. Durch den Krümmungsverlauf ist sichergestellt, dass die Stützwände ausschließlich mit ihren Außenrändern auf den die Aussparung begrenzenden Rand des ersten Bauteils auflaufen, wodurch beim Einführen der Vorrichtung in die Aussparung eine Auslenkung der Auslenkabschnitte mit maximalem Hebelarm erfolgt, was die zum Einclipsen der Vorrichtung aufzubringende Kraft minimiert.

Da der den Grundkörper des Halteelements aufnehmende Teil der Aussparung immer etwas größer bemessen sein wird als der Grundkörper, kann es zu einer Verdrehung um einen Winkel µ der in die Aussparung eingeclipsten Vorrichtung um die Längsmittelachse kommen, wenn das Ausgleichselement aus dem Grundelement herausgedreht wird. Um trotz einer solchen Verdrehung ein optimales Abstützen der Stützwände an dem ersten Bauteil zu gewährleisten, können die Stützwände unter unterschiedlichen Winkeln α, β zu einer Ebene ausgerichtet sein, welche die Längsmittelachse enthält und sich mittig zwischen Ursprüngen der Stützwände an dem Grundkörper erstreckt. Dabei ist der in Drehrichtung gesehen vorgelagerte Winkel α vorteilhafterweise um den Winkel µ kleiner als der Winkel β, so dass die Stützwände nach einer Verdrehung der Vorrichtung um den Winkel µ in der Aussparung zumindest annähernd symmetrisch mit der Aussparung ausgerichtet sind. Als Ursprung ist hier ein Bereich einer Stützwand definiert, an dem diese aus dem Grundkörper hervorgeht.

Vorteilhafterweise ist zur Begrenzung einer Verdrehung der in der Aussparung des ersten Bauteils aufgenommen Vorrichtung um die Längsmittelachse, die durch das Herausdrehen des Ausgleichselements aus dem Grundelement verursacht werden kann, ein Satz von ersten Drehbegrenzungsflächen an dem Halteelement vorgesehen, insbesondere um die Drehbewegung auf den erwähnten Winkel µ zu begrenzen.

Außerdem kann ein Satz von zweiten Drehbegrenzungsflächen an dem Halteelement vorgesehen sein, um eine Verdrehung der in der Aussparung des ersten Bauteils aufgenommenen Vorrichtung um die Längsmittelachse auch in einer Richtung zu begrenzen, die zu einer durch das Herausdrehen des Ausgleichselements aus dem Grundelement verursachten Drehbewegung entgegengesetzt ist.

Des Weiteren kann das Halteelement an einem dem zweiten Bauteil abgewandten Ende des Grundkörpers eine Auskragung ausbilden, die zusammen mit dem oberen Rand der Stützwand zur Sicherung der Vorrichtung an dem ersten Bauteil dient. Dabei sind die Auskragung und der obere Rand derart zueinander beabstandet, dass sie einen die Aussparung definierenden Randbereich des ersten Bauteils zwischen sich aufnehmen können. Idealerweise ist der Abstand zwischen Auskragung und oberem Rand zumindest annähernd an die Stärke des Randbereichs des ersten Bauteils angepasst.

Vorteilhafterweise sind der Satz von ersten Drehbegrenzungsflächen und/oder der Satz von zweiten Drehbegrenzungsflächen in Richtung der Längsmittelachse gesehen zwischen der Auskragung und dem oberen Rand ausgebildet.

Gemäß einer zweiten Ausführungsform definiert der Grundkörper in Umfangsrichtung einen Rahmen mit einem Paar von einander gegenüberliegenden Rahmenwänden, wobei jeder Rahmenwand eine zu dieser beabstandete Stützwand zugeordnet ist. Jede Stützwand kann dabei im Wesentlichen parallel zu ihrer Rahmenwand ausgerichtet sein.

Vorzugsweise umfasst jede Stützwand zwei voneinander wegweisende Auslenkabschnitte, die durch einen sich in Richtung Längsmittelachse erstreckenden und die Stützwand und die Rahmenwand verbindenden Steg sowie durch eine dem zweiten Bauteil zugewandte und die Stützwand und die Rahmenwand verbindende Konsole definiert sind.

Bevorzugt verläuft die Biegelinie jedes Auslenkabschnitts von einem dem zweiten Bauteil abgewandten Ende des Stegs diagonal durch die Stützwand in Richtung eines dem zweiten Bauteil zugewandten Bereichs eines Außenrandes der Stützwand.

Um ein Durchfallen der Vorrichtung durch die Aussparung des ersten Bauteils zu verhindern, erstreckt sich von jedem Auslenkabschnitt ein Fortsatz nach außen. Die Fortsätze einer Stützwand gehen bevorzugt in eine die Fortsätze verbindende Auskragung über, welche einen die Aussparung begrenzenden Randbereich des ersten Bauteils überragen kann.

Des Weiteren ist an jedem Auslenkabschnitt ein Gegenlager ausgebildet, welches eine in Richtung der Längsmittelachse gesehen zu einem Fortsatz beabstandete Stützfläche ausbildet. Die Fortsätze und Gegenlager einer Stützwand dienen zur Sicherung der Vorrichtung an dem ersten Bauteil. Dabei sind die Fortsätze und die Stützflächen der Gegenlager derart zueinander beabstandet, dass sie einen die Aussparung definierenden Randbereich des ersten Bauteils zwischen sich aufnehmen können. Idealerweise ist der Abstand zwischen Fortsatz und Stützfläche zumindest annähernd an die Stärke des Randbereichs des ersten Bauteils angepasst.

Zur radialen Fixierung des Halteelements an dem ersten Bauteil können federnde Positionierflächen vorgesehen sein, um die in der Aussparung des ersten Bauteils aufgenommene Vorrichtung gegen einen die Aussparung begrenzenden Rand des ersten Bauteils abzustützen.

Bevorzugt umfassen die Positionierflächen einen Satz von ersten Positionierflächen, die an der Stützwand zwischen dem Gegenlager und dem Fortsatz eines jeden Auslenkabschnitts ausgebildet sind. Zusätzlich oder alternativ kann ein Satz zweiter Positionierflächen vorgesehen sein, die an den Stützwänden zugewandten Verlängerungen von Rahmenwänden ausgebildet sind, die zumindest annähernd senkrecht zu den Stützwänden verlaufen.

Zur Demontage der Vorrichtung von dem ersten Bauteil können Angriffsmerkmale, insbesondere für ein Werkzeug, wie zum Beispiel eine Zange, an den Fortsätzen vorgesehen sein, durch welche sich die Auslenkabschnitte entgegen ihrer Rückstellkraft auslenken lassen. Die Auskragung kann dabei einen Schutz für das erste Bauteil vor einer Beschädigung durch das Werkzeug bilden.

Nachfolgend wird die Erfindung rein beispielhaft anhand von möglichen Ausführungsformen unter Bezugnahme auf die beigefügten Zeichnungen beschrieben. Es zeigen:
- Fig. 1: eine Explosionsdarstellung einer erfindungsgemäßen Vorrichtung gemäß einer ersten Ausführungsform;
- Fig. 2: eine Seitenansicht der Vorrichtung von Fig. 1;
- Fig. 3: eine perspektivische Ansicht der Vorrichtung von Fig. 1;
- Fig. 4: eine Teilschnittansicht der Vorrichtung von Fig. 1, wobei die Vorrichtung in einer Aussparung eines ersten Bauteils aufgenommen ist und ein Ausgleichselement der Vorrichtung sich an einem zweiten Bauteil abstützt;
- Fig. 5: eine Draufsicht auf die Unterseite eines Halteelements der Vorrichtung von Fig. 1, welches in einer kleineren Aussparung aufgenommen ist;
- Fig. 6: eine Draufsicht auf die Unterseite eines Halteelements der Vorrichtung von Fig. 1, welches in einer größeren Aussparung aufgenommen ist;
- Fig. 7: eine perspektivische Ansicht einer Vorrichtung gemäß einer zweiten Ausführungsform; und
- Fig. 8: eine perspektivische Ansicht eines Halteelements der Vorrichtung von Fig. 7.

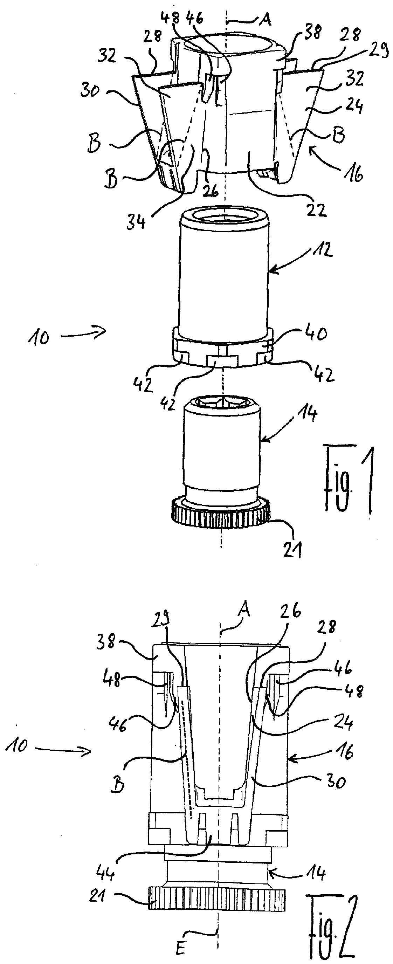

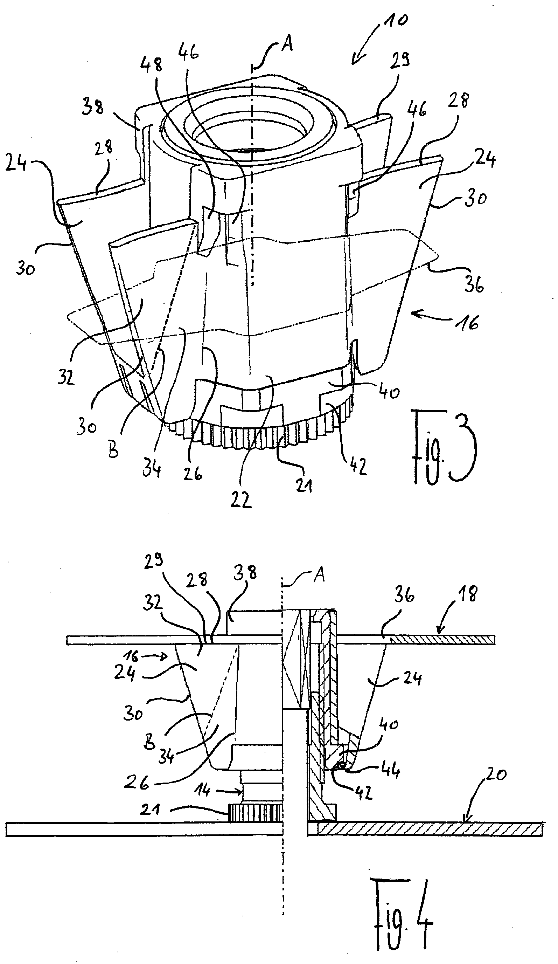

In Fig. 1 ist eine erfindungsgemäße Vorrichtung 10 gemäß einer ersten Ausführungsform dargestellt. Die Vorrichtung 10 umfasst ein Grundelement 12, das eine Längsmittelachse A definiert, ein Ausgleichselement 14 sowie ein Halteelement 16 und dient zum Ausgleichen von Toleranzen zwischen einem ersten Bauteil 18, z.B. einem Dachblech eines Kraftfahrzeugs, und einem zweiten Bauteil 20, z.B. einer unter dem Dachblech liegenden Trägerstruktur (siehe Fig. 4).

Das Grundelement 12 und das Ausgleichselement 14 stehen miteinander in Gewindeeingriff, so dass durch Verdrehen des Ausgleichselements 14 um die Längsmittelachse A das Ausgleichselement 14 aus dem Grundelement 12 in Richtung des zweiten Bauteils 20 ausgedreht werden kann, um sich dort mittels einer Anschlagscheibe 21 abzustützen (Fig. 4).

Das Halteelement 16 umfasst einen auf das Grundelement 12 aufgepressten und/oder mit diesem verklebten Grundkörper 22 mit zwei diametral angeordneten Paaren von Stützwänden 24, die dort, wo sie aus dem Grundkörper 22 hervorgehen, einen Ursprung 26 bilden. Selbstverständlich kann die Anzahl der Stützwände 24 von vier abweichen. Auch können die Stützwände 24 an anderer Stelle an dem Grundkörper 22 ausgebildet sein.

Die Stützwände 24 weisen einen der Anschlagscheibe 21 bzw. im montierten Zustand der Vorrichtung 10 jeweils einen dem zweiten Bauteil 20 abgewandten oberen Rand 28 auf, der hier eine Stützfläche 29 definiert.

Jede der Stützwände 24 weist ferner einen Außenrand 30 auf und umfasst einen Auslenkabschnitt 32, der entgegen einer Rückstellkraft ausgelenkt werden kann und von einem starren Abschnitt 34 durch eine Biegelinie B separiert ist.

Anhand von Fig. 1, 3 und 4 ist zu erkennen, dass die Biegelinie B von einem Bereich in dem die Stützfläche 29 einer Stützwand 24 aus dem Grundkörper 22 hervorgeht, diagonal durch die Stützwand 24 in Richtung ihres Außenrandes 30 verläuft, wobei in Fig. 3 die Biegelinie B nur an einer Stützwand 24 beispielhaft eingezeichnet ist. Mit anderen Worten nimmt der Abstand zwischen der Biegelinie B und dem Außenrand 30 in Richtung des oberen Randes 28 zu.

Auch der Abstand zwischen der Längsmittelachse A und dem Außenrand 30 jeder Stützwand 24 nimmt in Richtung des oberen Randes 28 zu, die Stützwände 24 sind gewissermaßen nach oben hin ausgestellt.

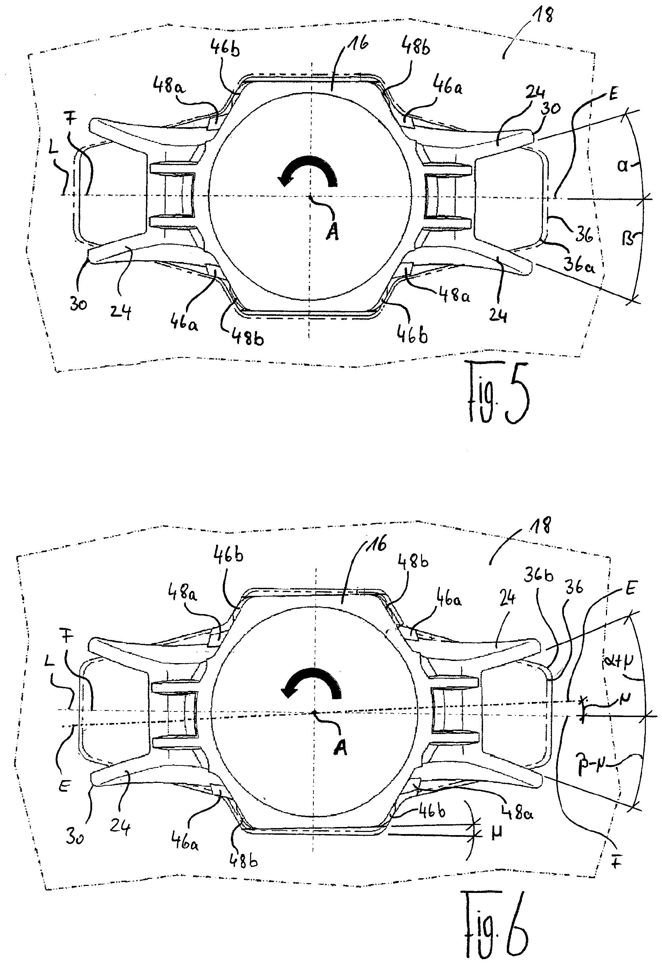

Wie Fig. 2 zeigt, nimmt der Abstand zwischen den Stützwänden 24 eines Paares von Stützwänden 24 nach unten in Richtung der Anschlagscheibe 21 ab. Anders gesagt laufen die Stützwände 24 eines Paares nach oben auseinander. Außerdem sind die Stützwände 24 jedes Paares von Stützwänden 24 voneinander weggekrümmt (Fig. 5 und Fig. 6)

Fig. 3 zeigt die Vorrichtung 10, wie sie teilweise in eine Aussparung 36 des ersten Bauteils 18 eingeführt ist. Aufgrund des in Richtung der Anschlagscheibe 21 abnehmenden Abstandes zwischen den Stützwänden 24 eines Paares von Stützwänden 24, weist jedes Paar von Stützwänden 24 in einem der Anschlagscheibe 21 zugewandten Bereich ein Untermaß gegenüber der Aussparung 36 und in einem der Anschlagscheibe 21 abgewandten Bereich ein Übermaß gegenüber der Aussparung 36 auf, welcher Effekt durch die Krümmung der Stützwände 24 zusätzlich verstärkt wird.

Demnach lässt sich die Vorrichtung 10 ohne Kraftaufwand bis zu einer Tiefe in die Aussparung 36 einführen, in welcher die Außenränder 30 der Stützwände 24 mit einem die Aussparung 36 begrenzenden Rand des ersten Bauteils 18 in Kontakt geraten. Ab diesem Punkt wird zum weiteren Einführen der Vorrichtung 10 ein höherer Kraftaufwand benötigt, da das weitere Einführen der Vorrichtung 10 nur unter Zusammendrücken der Stützwände 24 erfolgen kann.

Wird die Vorrichtung 10 unter Aufbringung einer Kraft entlang der Längsmittelachse A in Richtung des zweiten Bauteils 20 weiter in die Aussparung 36 hineingedrückt, so werden bei fortschreitendem Eindringen der Vorrichtung 10 in die Aussparung 36 die Auslenkabschnitte 32 der Stützwände 24 durch den die Aussparung 36 begrenzenden Rand des ersten Bauteils 18 entgegen ihrer Rückstellkraft entlang der Biegelinie B ausgelenkt. Im vorliegenden Ausführungsbeispiel bedeutet dies, dass die Auslenkabschnitte 32 eines Paares von Stützwänden 24 beim Einführen der Vorrichtung 10 in die Aussparung 36 aufeinander zu bewegt werden, während die Außenränder 30 der Stützwände 24 entlang den die Aussparung 36 begrenzenden Rand des ersten Bauteils 18 gleiten.

Somit müssen beim Einclipsen der Vorrichtung 10 in die Aussparung 36 im Wesentlichen zwei Kräfte überwunden werden, nämlich einerseits eine Reibkraft zwischen den Außenrändern 30 der Stützwände 24 und dem die Aussparung 36 begrenzenden Rand des ersten Bauteils 18 und andererseits die Rückstellkraft der Auslenkabschnitte 32. Bevorzugt übersteigt die maximale Summe dieser Kräfte nicht mehr als 40 bis 50 N, was einer üblicherweise tolerierbaren Kraft bei einer Ein-Hand-Montage entspricht. Dabei nimmt die zur Auslenkung der Auslenkabschnitte 32 aufzubringende Kraft mit zunehmender Eindringtiefe der Vorrichtung 10 in die Aussparung 36 degressiv ab, da wegen der diagonalen Biegelinie B eine Hebellänge, mit welcher die Auslenkabschnitte 32 ausgelenkt werden, in Richtung des oberen Randes 28 immer größer wird.

Nach Passieren der Aussparung 36 kehren die Auslenkabschnitte 32 in Folge der Rückstellkraft in ihre ursprünglichen Ruhelagen zurück und hintergreifen den die Aussparung 36 begrenzenden Randbereich des ersten Bauteils 18, d.h. die Vorrichtung 10 ist nun in das erste Bauteil 18 eingeclipst.

Fig. 4 zeigt die Vorrichtung 10 nach dem Einclipsen in das erste Bauteil 18 und in einem Endmontagezustand, in welchem sich sowohl die Stützwände 24 an der Unterseite des ersten Bauteils 18 abstützen, als auch das Ausgleichselement 14 aus dem Grundelement 12 ausgedreht ist und sich mit der Anschlagscheibe 21 gegen das zweite Bauteil 20 abstützt.

Zur axialen Sicherung des ersten Bauteils 18 an dem Halteelement 16 sind an dem Grundkörper 22 radial nach außen vorspringende Auskragungen 38 vorgesehen, die zu der Stützfläche 29 der Stützwände 24 axial beabstandet sind und zusammen mit den Stützwänden 24 eine Aufnahme für das erste Bauteil 18 bilden.

Die Auskragungen 38 sind an einem dem zweiten Bauteil 20 abgewandten Ende des Halteelements 16 ausgebildet, und zwar in Form von vier vorspringenden Schultern, die zu den Stützwänden 24 versetzt um den Grundkörper 22 herum gleichverteilt angeordnet sind. Es versteht sich, dass die Auskragungen 38 grundsätzlich aber auch mit den Stützwänden 24 ausgerichtet sein können, d.h. direkt über diesen angeordnet sein können. Überdies kann die Zahl der Auskragungen 38 von vier abweichen.

In einem dem zweiten Bauteil 20 zugewandten Endbereich des Grundelements 12 ist ein in Umfangsrichtung umlaufender, radial vorspringender Kragen 40 ausgebildet (Fig. 1). Der Kragen 40 weist an einer dem zweiten Bauteil 20 zugewandten Seite in Umfangsrichtung verteilte Vertiefungen 42 auf, die sich von einer Außenseite des Kragens 40 radial nach innen erstrecken, so dass ein dem zweiten Bauteil 20 abgewandter Abschnitt des Kragens 40 gegenüber den Vertiefungen 42 hervorsteht.

Wie anhand der Schnittdarstellung von Fig. 4 zu sehen ist, dienen die Vertiefungen 42 zur Aufnahme von Rastvorsprüngen 44 des Halteelements 16, welche dem zweiten Bauteil 20 zugewandt jeweils zwischen zwei Stützwänden 24 ausgebildet sind. Durch die in die Vertiefungen 42 eingreifenden Rastvorsprünge 44 ist das Halteelement 16 zusätzlich gegen eine axiale Verschiebung relativ zu dem Grundelement 12 gesichert.

Wie bereits erwähnt, kann das Ausgleichselement 14 durch Verdrehen um die Längsmittelachse A aus dem Grundelement 12 herausgedreht werden, was eine Verdrehung der Vorrichtung 10 in der Aussparung 36 des ersten Bauteils 18 bewirken kann, insbesondere dann wenn ein Lochbild der Aussparung 36 produktionsbedingt von einem Normlochbild abweicht. Dabei ist die Verdrehung der Vorrichtung 10 umso größer je größer die tatsächliche Aussparung 36a, 36b gegenüber einer Aussparung 36 mit Normmaß ist (Fig. 5 und Fig. 6).

Zur Begrenzung der durch das Herausdrehen des Ausgleichselements 14 verursachten Verdrehung der Vorrichtung 10 um die Längsmittelachse A ist ein Satz von ersten Drehbegrenzungsflächen 46 an dem Halteelement 16 ausgebildet. Überdies ist ein Satz von zweiten Drehbegrenzungsflächen 48 vorgesehen, die eine Verdrehung der Vorrichtung 10 in der entgegengesetzten Richtung begrenzen.

Jeder Satz von Drehbegrenzungsflächen 46, 48 umfasst ein Paar von Drehbegrenzungsflächen 46a, 48a, die in unmittelbarer Nähe zu den Stützwänden 24 ausgebildet sind, und ein Paar von Drehbegrenzungsflächen 46b, 48b, die von den Stützwänden 24 entfernt ausgebildet sind. Die Paare von Drehbegrenzungsflächen 46b, 48b, die entfernt zu den Stützwänden 24 ausgebildet sind, weisen von dem Grundkörper 22 nach außen gesehen verschiedene Abmessungen auf, wobei das Paar von Drehbegrenzungsflächen 46b, das dem Satz von ersten Drehbegrenzungsflächen 46 zugeordnet ist, nach außen hin größer dimensioniert ist als das Paar von Drehbegrenzungsflächen 48b, welches dem Satz von zweiten Drehbegrenzungsflächen 48 zugeordnet ist.

Beide Sätze von Drehbegrenzungsflächen 46, 48 sind in Richtung der Längsmittelachse A gesehen zwischen den Stützwänden 24 und der Auskragung 38 ausgebildet. Da im eingeclipsten Zustand der Vorrichtung 10 das erste Bauteil 18 zwischen der den Stützwänden 24 und der Auskragung 38 aufgenommen ist, können die Drehbegrenzungsflächen 46, 48 bei einer Verdrehung der Vorrichtung 10 gegen den die Aussparung 36 begrenzenden Rand des ersten Bauteils 18 anschlagen.

Fig. 5 und Fig. 6 zeigen das in der Aussparung 36 aufgenommene Halteelement 16 von unten, d.h. aus Perspektive des zweiten Bauteils 20 mit Blick in Richtung des schemenhaft dargestellten ersten Bauteils 18. In Fig. 5 ist die tatsächliche Aussparung 36a (durchgezogene Linie) kleiner als die Aussparung 36 mit Normmaß (unterbrochene Linie), wohingegen in Fig. 6 die tatsächliche Aussparung 36b (durchgezogene Linie) größer ist als die Aussparung 36 mit Normmaß (unterbrochene Linie).

Ist die tatsächliche Aussparung 36a kleiner als die Aussparung 36 mit Normmaß (Fig. 5), tragen beim Einführen der Vorrichtung 10 in die Aussparung 36 beide Sätze von Drehbegrenzungsflächen 46, 48 zu einer korrekten Ausrichtung der Stützwände 24 bei, so dass im montierten Zustand der Vorrichtung 10 ein möglichst großer Überlapp zwischen den Stützwänden 24 und dem ersten Bauteil 18 vorliegt.

Beim Herausdrehen des Ausgleichselements 14 aus dem Grundelement 12 verdreht sich das Halteelement 16, aufgrund der Perspektive in Fig. 5 und 6 von unten entgegen dem Uhrzeigersinn, und der Satz von ersten Drehbegrenzungsflächen 46 schlägt an dem ersten Bauteil 18 an, wodurch die Drehbewegung des Halteelements 16 begrenzt wird.

Wie anhand von Fig. 5 zu erkennen ist, sind die Stützwände 24 eines Paares von Stützwänden 24 unter unterschiedlichen Winkeln α, β zu einer Ebene E ausgerichtet, welche die Längsmittelachse A enthält und welche sich mittig zwischen den Ursprüngen 26 der Stützwände 24 erstreckt. In der in Fig. 5 dargestellten Situation fällt die Ebene E mit einer Ebene F zusammen, die durch eine Längsachse L der Aussparung 36 und die Längsmittelachse A aufgespannt wird, da die tatsächliche Aussparung 36a kleiner ist als eine Aussparung 36 mit Normmaß und deshalb zumindest keine signifikante Verdrehung des Halteelements 16 zulässt.

Wie Fig. 5 zeigt, ist der dem Winkel α in Drehrichtung gesehen nachgelagerte Winkel β größer als der Winkel α, wobei die Differenz zwischen dem Winkel α und dem Winkel β einen Differenzwinkel µ definiert. Dabei sind die Winkel α, β zwischen den Stützwänden 24 und der Ebene E gleich den Winkeln α, β zwischen den Stützwänden 24 und der Ebene F.

Durch die asymmetrische Ausrichtung der Stützwände 24 zur Ebene F, weist die Stützwand 24, die unter dem größeren Winkel β ausgerichtet ist, einen größeren Überlapp mit dem ersten Bauteils 18 auf. Die Stützwand 24, die unter dem kleineren Winkel α ausgerichtet ist, weist dahingegen einen geringeren Überlapp mit dem ersten Bauteil 18 auf.

Sitzt die Vorrichtung 10 in einer Aussparung 36b, die größer ist als eine Aussparung 36 mit Normmaß, so ist eine größere Verdrehung des Halteelements 16 möglich, wobei die Verdrehung durch den Satz von ersten Drehbegrenzungsflächen 46 auf den Differenzwinkel µ begrenzt wird.

Eine Verdrehung des Halteelements 16 um den Differenzwinkel µ bewirkt auch eine Verdrehung der Stützwände 24 um denselben Winkel. Folglich wird auch die Ebene E bezüglich der Ebene F um den Differenzwinkel µ verdreht. Dadurch verringert sich der Winkel β zwischen der einen Stützwand 24 und der Ebene F um dem Differenzwinkel µ, wohingegen der Winkel α zwischen der Ebene F und der anderen Stützwand 24 um den Differenzwinkel µ zunimmt, so dass im Ergebnis beide Stützwände 24 einen etwa gleich großen Überlapp mit der Innenfläche des ersten Bauteils 18 aufweisen.

Die in Fig. 5 und Fig. 6 dargestellten Beispiele sind Extremstellungen des Halteelements 16 in der Aussparung 36, die bei einer maximal negativen und einer maximal positiven Abweichung der tatsächlichen Aussparung 36a, 36b von der Aussparung 36 mit Normmaß auftreten können. Selbstverständlich kann die Verdrehung des Halteelements 16 bei entsprechenden Maßen der tatsächlichen Aussparung 36a, 36b geringer als der Winkel µ ausfallen.

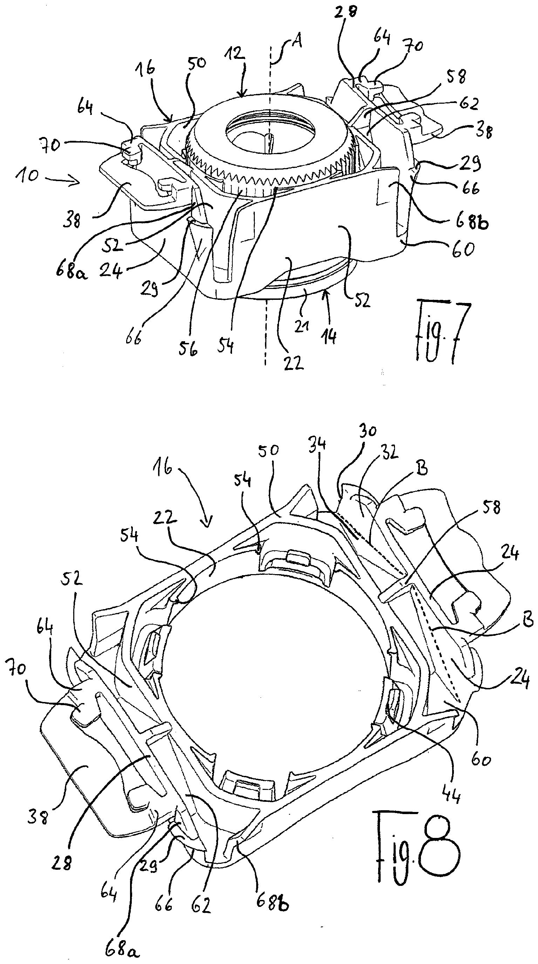

Fig. 7 zeigt eine zweite Ausführungsform der erfindungsgemäßen Vorrichtung 10, die ein Grundelement 12, ein Ausgleichselement 14 und ein Halteelement 16 mit einem Grundkörper 22 umfasst. Ebenso wie bei der ersten Ausführungsform stehen das Grundelement 12 und das Ausgleichselement 14 in Gewindeeingriff.

Der Grundkörper 22 definiert einen Rahmen 50, der zwei Paare von einander gegenüberliegenden Rahmenwänden 52 umfasst. An den dem Grundelement 12 zugewandten Innenseiten der Rahmenwände 52 sind jeweils ein Paar von federnd gelagerten Dornen 54 ausgebildet, hier also insgesamt vier Paare von federnd gelagerten Dornen 54 (Fig. 8). Die Dornen 54 dienen zur drehsicheren Fixierung des Grundelements 12 an dem Haltelement 16, indem die Dornen 54 mit einer an einer Mantelfläche des Grundelements 12 ausgebildete Rändelung 56 in Form von parallel zur Längsmittelachse A verlaufenden Rillen in Eingriff stehen und das Grundelement 12 festklemmen.

Zur zusätzlichen axialen Sicherung des Halteelements 16 an dem Grundelement 12 sind in Eckbereichen des Rahmens 50 außerdem vier Rastvorsprünge 44 für eine Verrastung mit dem Grundelement 12 vorgesehen (Fig. 8).

Es versteht sich, dass die Anzahl der Paare von federnd gelagerten Dornen 54 sowie die Anzahl der Rastvorsprünge 44 von jeweils vier abweichen kann und die Paare von federnd gelagerten Dornen 54 sowie die Rastvorsprünge 44 auch an anderer geeigneter Stelle angebracht werden können. Überdies ist prinzipiell auch eine andere Art der Befestigung des Grundelements 12 an dem Haltelement 16 denkbar, wie beispielsweise durch Verkleben.

Wie Fig. 8 zeigt, ist den Rahmenwänden 52 eines der Paare von gegenüberliegenden Rahmenwänden 52 jeweils eine im Wesentlichen parallel beabstandete Stützwand 24 zugeordnet, welche in einem zu einem oberen Rand 28 der Stützwand 24 benachbarten Bereich durch einen Steg 58 und in einem dem zweiten Bauteil 20 zugewandten Bereich durch eine Konsole 60 mit der jeweiligen Rahmenwand 52 verbunden ist. Der Steg 58 verläuft parallel zur Längsmittelachse A und ist mittig an der Rahmenwand 52 sowie der Stützwand 24 angebracht. Die Konsole 60 hingegen erstreckt sich über die gesamte Breite der Stützwand 24.

Jede Stützwand 24 bildet zwei voneinander abgewandte und von dem Steg 58 wegweisende Auslenkabschnitte 32 aus, die jeweils durch eine Biegelinie B von einem starren Abschnitt 34 separiert sind. Jede Biegelinie B verläuft ausgehend von dem Steg 58 diagonal durch die Stützwand 24 in Richtung eines dem zweiten Bauteil 20 zugewandten Bereichs eines Außenrandes 30 der Stützwand 24.

Zur Erhöhung der Steifigkeit der starren Abschnitte 34 bildet jede Konsole 60 von dem Steg 58 ausgehende und in Richtung des zweiten Bauteils 20 diagonal nach außen verlaufende Versteifungsabschnitte 62 aus, wobei die Steigungen der Versteifungsabschnitte 62 steiler sind als die Steigungen der diagonal verlaufenden Biegelinien B.

Von jedem Auslenkabschnitt 32 einer Stützwand 24 erstreckt sich im Bereich des oberen Randes 28 der Stützwand 24 ein Fortsatz 64 von dem Grundelement 12 weg nach außen. Die Fortsätze 64 einer Stützwand 24 gehen in eine die Fortsätze 64 verbindende Auskragung 38 über.

Des Weiteren sind zwei in Richtung des oberen Randes 28 zunehmend nach außen vorspringende und Stützflächen 29 bildende Gegenlager 66 an jeder Stützwand 24 ausgebildet, und zwar jeweils im Bereich der Außenränder 30 der Auslenkabschnitte 32. Die Gegenlager 66 sind in Richtung des zweiten Bauteils 20 zu der Auskragung 38 axial beabstandet und bilden zusammen mit der Auskragung 38 eine Aufnahme für das erste Bauteil 18.

Überdies ist jede Stützwand 24 ausgehend von dem Steg 58 in Richtung ihrer beiden Außenränder 30 nach außen gekrümmt. Dadurch weist jede Stützwand 24 im nicht eingeclipsten Zustand der Vorrichtung 10 an dem ersten Bauteil 18 im Bereich ihrer Außenränder 30 ein gewisses Übermaß gegenüber einer hier nicht dargestellten Aussparung 36 des ersten Bauteils 18 auf. Im eingeclipsten Zustand der Vorrichtung 10 an dem ersten Bauteil 18 drückt jede Stützwand 24 zumindest abschnittsweise zwischen den Fortsätzen 64 und den Gegenlagern 66 federnd gegen einen die Aussparung 36 begrenzenden Rand des ersten Bauteils 18, um dort einen Satz von ersten Positionierflächen 68a zu definieren, die zur Positionierung der Vorrichtung 10 in der Aussparung 36 beitragen.

Zusätzlich bilden diejenigen Rahmenwände 52, die zumindest annähernd senkrecht zu den Stützwänden 24 verlaufen, im Bereich ihrer den Stützwänden 24 zugewandten und dem zweiten Bauteil 20 abgewandten Ecken einen Satz von zweiten federnden Positionierflächen 68b aus, um die Vorrichtung 10 in der Aussparung 36 zu positionieren. Der Satz von zweiten Positionierflächen 68b befindet sich in Richtung der Längsmittelachse A gesehen auf einer Höhe, die zwischen der Auskragung 38 und dem Gegenlager 66 liegt, so dass der Satz von zweiten Positionierflächen 68b im montierten Zustand der Vorrichtung 10 gegen den die Aussparung 36 begrenzenden Rand des ersten Bauteils 18 drückt.

Indem sowohl der Satz von ersten Positionierflächen 68a als auch der Satz von zweiten Positionierflächen 68b gegen den die Aussparung 36 begrenzenden Rand des ersten Bauteils 18 drücken, tragen sie zur radialen Positionierung der Vorrichtung 10 in der Aussparung 36 bei und gewährleisten auch bei toleranzbehafteten Aussparungen 36 einen ausreichenden Überlapp zwischen den Stützflächen 29 und dem ersten Bauteil 18.

Beim Einclipsen der Vorrichtung 10 in die Aussparung 36 des ersten Bauteils 18 geraten die Gegenlager 66 ab einer bestimmten Tiefe mit dem die Aussparung 36 begrenzenden Rand des ersten Bauteils 18 in Kontakt. Unter Aufbringung einer Kraft auf die Vorrichtung 10 entlang der Längsmittelachse A in Richtung des zweiten Bauteils 20 wird die Vorrichtung 10 weiter in die Aussparung 36 hineingedrückt, wodurch die Auslenkabschnitte 32 über die Gegenlager 66 entgegen der Rückstellkraft der Auslenkabschnitte 32 ausgelenkt werden. Im vorliegenden Ausführungsbeispiel bedeutet dies, dass die beiden Auslenkabschnitte 32 der Stützwand 24 beim Einführen der Vorrichtung 10 in die Aussparung 36 in Richtung der Rahmenwand 52 ausgelenkt werden, während die Gegenlager 66 entlang den die Aussparung 36 begrenzenden Rand des ersten Bauteils 18 gleiten.

Dabei nimmt die zur Auslenkung der Auslenkabschnitte 32 aufzubringende Kraft mit zunehmender Eindringtiefe der Vorrichtung 10 in die Aussparung 36 degressiv ab, da wegen der diagonalen Biegelinie B eine Hebellänge, mit der die Auslenkabschnitte 32 ausgelenkt werden, in Richtung des oberen Randes 28 immer größer wird.

Nach Passieren der Aussparung 36 kehren die Auslenkabschnitte 32 und somit auch die daran ausgebildeten Gegenlager 66 aufgrund der Rückstellkraft der Auslenkabschnitte 32 in Richtung ihrer ursprünglichen Ruhelagen zurück, so dass die Stützwände 24 zumindest abschnittsweise gegen den die Aussparung 36 begrenzenden Randbereich des ersten Bauteils 18 drücken und die Stützflächen 29 der Gegenlager 66 den die Aussparung 36 begrenzenden Randbereich des ersten Bauteils 18 hintergreifen.

Zur Demontage der in das erste Bauteil 18 eingeclipsten Vorrichtung 10 ist an den Fortsätzen 64 jeweils ein Angriffsmerkmal 70 ausgebildet, das dazu dient mit Hilfe eines nicht dargestellten Werkzeugs, beispielsweise einer Zange, die Auslenkabschnitte 32 entgegen ihrer Rückstellkraft auszulenken, so dass die Vorrichtung 10 aus der Aussparung 36 wieder herausgezogen werden kann.

Damit das Werkzeug bei der Demontage der Vorrichtung 10 nicht das erste Bauteil 18 beschädigt, ist die Auskragung 38 nach außen verbreitert, um als Schutz zu dienen.

### Bezugszeichenliste

- 10: Vorrichtung
- 12: Grundelement
- 14: Ausgleichselement
- 16: Halteelement
- 18: erstes Bauteil
- 20: zweites Bauteil
- 21: Anschlagscheibe
- 22: Grundkörper
- 24: Stützwand
- 26: Ursprung
- 28: oberer Rand
- 29: Stützfläche
- 30: Außenrand
- 32: Auslenkabschnitt
- 34: starrer Abschnitt
- 36: Aussparung
- 38: Auskragung
- 40: Kragen
- 42: Vertiefungen
- 44: Rastvorsprung
- 46: Satz von ersten Drehbegrenzungsflächen
- 48: Satz von zweiten Drehbegrenzungsflächen
- 50: Rahmen
- 52: Rahmenwand
- 54: Dorn
- 56: Rändelung
- 58: Steg
- 60: Konsole
- 62: Versteifungsabschnitt
- 64: Fortsatz
- 66: Gegenlager
- 68: Positionierflächen
- 70: Angriffsmerkmal
- α: Winkel
- β: Winkel
- µ: Differenzwinkel
- A: Längsmittelachse
- B: Biegelinie
- E: Ebene
- F: Ebene
- L: Längsachse

## Patentansprüche

1. Vorrichtung (10) zum Ausgleichen von Toleranzen zwischen einem ersten Bauteil (18) und einem zweiten Bauteil (20), umfassend ein Grundelement (12), welches eine Längsmittelachse (A) definiert, ein mit dem Grundelement (12) in Gewindeeingriff stehendes Ausgleichselement (14) und ein mit dem Grundelement (12) fest verbundenes Halteelement (16) zum Halten der Vorrichtung (10) an dem ersten Bauteil (18), wobei das Halteelement (16) einen Grundkörper (22) umfasst,
und wobei an dem Grundkörper (22) eine Stützwand (24) ausgebildet ist, die im am ersten Bauteil (18) gehaltenen Zustand der Vorrichtung (10) einen dem zweiten Bauteil (20) abgewandten oberen Rand (28) aufweist,
**dadurch gekennzeichnet, dass**
die Stützwand (24) einen Auslenkabschnitt (32) umfasst, der entgegen einer Rückstellkraft entlang einer nicht senkrecht zur Längsmittelachse (A) orientierten Biegelinie (B) auslenkbar ist, welche ausgehend von einem Bereich, in dem der obere Rand (28) aus dem Grundkörper (22) hervorgeht, diagonal durch die Stützwand (24) in Richtung eines Außenrandes (30) der Stützwand (24) verläuft.

2. Vorrichtung nach Anspruch 1,
**dadurch gekennzeichnet, dass**
der Außenrand (30) eine zu der Längsmittelachse (A) parallele Erstreckungskomponente aufweist und der Außenrand (30) und die Biegelinie (B) zueinander beabstandet sind.

3. Vorrichtung nach Anspruch 1 oder 2,
**dadurch gekennzeichnet, dass**
der Abstand zwischen dem Außenrand (30) und der Biegelinie (B) in Richtung des oberen Randes (28) zunimmt.

4. Vorrichtung nach zumindest einem der vorstehenden Ansprüche,
**dadurch gekennzeichnet, dass**
der Außenrand (30) nicht parallel zur Längsmittelachse (A) verläuft, insbesondere wobei ein Abstand zwischen dem Außenrand (30) und der Längsmittelachse (A) in Richtung des oberen Randes (28) zunimmt.

5. Vorrichtung nach zumindest einem der vorstehenden Ansprüche,
**dadurch gekennzeichnet, dass**
ein Paar von in Umfangsrichtung des Grundkörpers (22) zueinander beabstandeten Stützwänden (24) vorgesehen ist und insbesondere auf gegenüberliegenden Seiten des Grundkörpers (22) jeweils ein Paar von Stützwänden (24) vorgesehen ist.

6. Vorrichtung nach Anspruch 5,
**dadurch gekennzeichnet, dass**
der Abstand zwischen den Stützwänden (24) eines Paares von Stützwänden (24) in Richtung des oberen Randes (28) zunimmt.

7. Vorrichtung nach Anspruch 5 oder 6,
**dadurch gekennzeichnet, dass**
der Abstand zwischen den Stützwänden (24) eines Paares von Stützwänden (24) ausgehend von dem Grundkörper (22) nach außen hin zunimmt.

8. Vorrichtung nach zumindest einem der Ansprüche 5 bis 7,
**dadurch gekennzeichnet, dass**
die Stützwände (24) eines Paares von Stützwänden (24) voneinander weggekrümmt sind.

9. Vorrichtung nach zumindest einem der Ansprüche 5 bis 8,
**dadurch gekennzeichnet, dass**
die Stützwände (24) unter unterschiedlichen Winkeln (α, β) zu einer Ebene (E) ausgerichtet sind, welche die Längsmittelachse (A) enthält und sich mittig zwischen Ursprüngen (26) der Stützwände (24) an dem Grundkörper (22) erstreckt, wobei der eine Winkel (α) um einen Differenzwinkel (µ) kleiner ist als der andere Winkel (β).

10. Vorrichtung nach zumindest einem der vorstehenden Ansprüche,
**dadurch gekennzeichnet, dass**
an dem Halteelement (16) ein Satz von ersten Drehbegrenzungsflächen (46) vorgesehen ist, um eine Verdrehung um die Längsmittelachse (A) der in einer Aussparung (36) des ersten Bauteils (18) aufgenommen Vorrichtung (10), die durch das Herausdrehen des Ausgleichselements (14) aus dem Grundelement (12) verursacht wird, auf einen vorbestimmten Winkel zu begrenzen.

11. Vorrichtung nach Anspruch 9 und 10,
**dadurch gekennzeichnet, dass**
der vorbestimmte Winkel zumindest annähernd dem Differenzwinkel (µ) entspricht und der Winkel (α) dem Winkel (β) in Drehrichtung gesehen vorgelagert ist.

12. Vorrichtung nach zumindest einem der vorstehenden Ansprüche,
**dadurch gekennzeichnet, dass**
an dem Halteelement (16) ein Satz von zweiten Drehbegrenzungsflächen (48) vorgesehen ist, um eine Verdrehung der in einer Aussparung (36) des ersten Bauteils (18) aufgenommenen Vorrichtung (10) um die Längsmittelachse (A) in eine Richtung zu begrenzen, die zu einer beim Herausdrehen des Ausgleichselements (14) aus dem Grundelement (12) verursachten Drehbewegung entgegengesetzt ist.

## Claims

1. An apparatus (10) for compensating tolerances between a first component (18) and a second component (20), said apparatus (10) comprising a base element (12) which defines a central longitudinal axis (A); a compensation element (14) in threaded engagement with the base element (12); and a holding element (16) fixedly connected to the base element (12) for holding the apparatus (10) at the first component (18), wherein the holding element (16) comprises a base body (22); and
wherein a support wall (24) is formed at the base body (22) and has an upper edge (28) remote from the second component (20) in the state of the apparatus (10) held at the first component (18),
**characterized in that**
the support wall (24) comprises a deflection section (32) deflectable against a return force along a deflection curve (B) which is not oriented perpendicular to the central longitudinal axis (A) and which extends, starting from a region in which the upper edge (28) projects from the base body (22), diagonally through the support wall (24) in the direction of an outer edge (30) of the support wall (24).

2. An apparatus in accordance with claim 1,
**characterized in that**
the outer edge (30) has a component of extent in parallel with the central longitudinal axis (A); and **in that** the outer edge (30) and the deflection curve (B) are spaced apart from one another.

3. An apparatus in accordance with claim 1 or claim 2,
**characterized in that**
the spacing between the outer edge (30) and the deflection curve (B) increases in the direction of the upper edge (28).

4. An apparatus in accordance with at least one of the preceding claims,
**characterized in that**
the outer edge (30) does not extend in parallel with the central longitudinal axis (A), in particular with a spacing between the outer edge (30) and the central longitudinal axis (A) increasing in the direction of the upper edge (28).

5. An apparatus in accordance with at least one of the preceding claims,
**characterized in that**
a pair of support walls (24) spaced apart from one another in the peripheral direction of the base body (22) is provided; and in particular **in that** a respective pair of support walls (24) is provided at oppositely disposed sides of the base body (22).

6. An apparatus in accordance with claim 5,
**characterized in that**
the spacing between the support walls (24) of a pair of support walls (24) increases in the direction of the upper edge (28).

7. An apparatus in accordance with claim 5 or claim 6,
**characterized in that**
the spacing between the support walls (24) of a pair of support walls (24) increases outwardly, starting from the base body (22).

8. An apparatus in accordance with at least one of the claims 5 to 7,
**characterized in that**
the support walls (24) of a pair of support walls (24) are curved away from one another.

9. An apparatus in accordance with at least one of the claims 5 to 8,
**characterized in that**
the support walls (24) are oriented at different angles (α, β) to a plane (E) which includes the central longitudinal axis (A) and extends centrally between origins (26) of the support walls (24) at the base body (22), with the one angle (α) being smaller by a difference angle (µ) than the other angle (β).

10. An apparatus in accordance with at least one of the preceding claims,
**characterized in that**
a set of first rotational boundary surfaces (46) is provided at the holding element (16) to bound a rotation of the apparatus (10) received in a cut-out (36) of the first component (18) about the central longitudinal axis (A) to a predetermined angle, said rotation being caused by the unscrewing of the compensation element (14) from the base element (12).

11. An apparatus in accordance with claim 9 and claim 10,
**characterized in that**
the predetermined angle at least approximately corresponds to the difference angle (µ) and the angle (α) is positioned in front of the angle (β) viewed in the direction of rotation.

12. An apparatus in accordance with at least one of the preceding claims,
**characterized in that**
a set of second rotational boundary surfaces (48) is provided at the holding element (16) to bound a rotation of the apparatus (10) received in a cut-out (36) of the first component (18) about the central longitudinal axis (A) in a direction which is opposite to a rotational movement caused on the unscrewing of the compensation element (14) from the base element (12).

## Revendications

1. Dispositif (10) de compensation de tolérances entre un premier composant (18) et un second composant (20), comprenant un élément de base (12) définissant un axe médian longitudinal (A), un élément de compensation (14) en prise par filetage avec l'élément de base (12), et un élément de retenue (16) relié solidairement à l'élément de base (12) pour retenir le dispositif (10) sur le premier composant (18), l'élément de retenue (16) comprenant un corps de base (22), une paroi de soutien (24) étant réalisée sur le corps de base (22), laquelle présente un bord supérieur (28) détourné du second composant (20) dans l'état du dispositif (10) retenu sur le premier composant (18),
**caractérisé en ce que**
la paroi de soutien (24) comprend une portion de déviation (32) pouvant être déviée à l'encontre d'une force de rappel le long d'une ligne de flexion (B) qui n'est pas orientée perpendiculairement à l'axe médian longitudinal (A) et qui s'étend en diagonale à travers la paroi de soutien (24) en direction d'un bord extérieur (30) de la paroi de soutien (24), à partir d'une zone dans laquelle le bord supérieur (28) dépasse du corps de base (22).

2. Dispositif selon la revendication 1,
**caractérisé en ce que**
le bord extérieur (30) présente une composante d'extension parallèle à l'axe médian longitudinal (A), et le bord extérieur (30) et la ligne de flexion (B) sont espacées l'un de l'autre.

3. Dispositif selon la revendication 1 ou 2,
**caractérisé en ce que**
la distance entre le bord extérieur (30) et la ligne de flexion (B) augmente en direction du bord supérieur (28).

4. Dispositif selon l'une au moins des revendications précédentes,
**caractérisé en ce que**
le bord extérieur (30) ne s'étend pas parallèlement à l'axe médian longitudinal (A), et en particulier une distance entre le bord extérieur (30) et l'axe médian longitudinal (A) augmente en direction du bord supérieur (28).

5. Dispositif selon l'une au moins des revendications précédentes,
**caractérisé en ce que**
il est prévu une paire de parois de soutien (24) espacées l'une de l'autre en direction périphérique du corps de base (22), et en particulier il est prévu une paire respective de parois de soutien (24) sur des côtés opposés du corps de base (22).

6. Dispositif selon la revendication 5,
**caractérisé en ce que**
la distance entre les parois de soutien (24) d'une paire de parois de soutien (24) augmente en direction du bord supérieur (28).

7. Dispositif selon la revendication 5 ou 6,
**caractérisé en ce que**
la distance entre les parois de soutien (24) d'une paire de parois de soutien (24) augmente vers l'extérieur à partir du corps de base (22).

8. Dispositif selon l'une au moins des revendications 5 à 7,
**caractérisé en ce que**
les parois de soutien (24) d'une paire de parois de soutien (24) sont recourbées en éloignement l'une de l'autre.

9. Dispositif selon l'une au moins des revendications 5 à 8,
**caractérisé en ce que**
les parois de soutien (24) sont orientées selon différents angles (α, β) par rapport à un plan (E) qui contient l'axe médian longitudinal (A) et qui s'étend au milieu entre des origines (26) des parois de soutien (24) sur le corps de base (22), l'un des angles (α) étant inférieur d'un angle différentiel (µ) à l'autre angle (β).

10. Dispositif selon l'une au moins des revendications précédentes,
**caractérisé en ce que**
un lot de premières surfaces de limitation de rotation (46) est prévu sur l'élément de retenue (16) pour limiter à un angle prédéterminé une rotation autour de l'axe médian longitudinal (A) du dispositif (10) logé dans une échancrure (36) du premier composant (18), causée par dévissage de l'élément de compensation (14) hors de l'élément de base (12).

11. Dispositif selon la revendication 9 et 10,
**caractérisé en ce que**
l'angle prédéterminé correspond au moins approximativement à l'angle différentiel (µ), et l'angle (α) est en amont de l'angle (β), vu en direction de rotation.

12. Dispositif selon l'une au moins des revendications précédentes,
**caractérisé en ce que**
un lot de secondes surfaces de limitation de rotation (48) est prévu sur l'élément de retenue (16) pour limiter dans une direction une rotation autour de l'axe médian longitudinal (A) du dispositif (10) logé dans une échancrure (36) du premier composant (18), direction qui est opposée à un mouvement de rotation causé par dévissage de l'élément de compensation (14) hors de l'élément de base (12).
